# DEMANDE DE BREVET EUROPEEN

(11) **EP 1 997 919 A1**
(43) Date de publication de la demande: **03.12.2008**
(21) Numéro de dépôt: 07108864.5
(22) Date de dépôt: 24.05.2007
(51) Int. Cl.: C22B 19/00

(54) **Procédé de valorisation de résidus riches en zinc et en sulfates**

(71) Demandeur: PAUL WURTH S.A., 1122 Luxembourg (LU)
(72) Inventeur: Roth, Jean-Luc, 57100 Thionville (FR); Bontemps, Marie, 2222 Luxembourg (LU)
(74) Mandataire: Kihn, Pierre Emile Joseph

(57) **Abrégé**

La présente invention décrit un procédé de traitement de résidus comprenant des ferrites de zinc et des métaux non ferreux choisis parmi le groupe constitué par le plomb (Pb), l'argent (Ag), l'indium (In), le germanium (Ge) et le Gallium (Ga) ou leurs mélanges sous forme d'oxydes et de sulfates comprenant les étapes suivantes :
• un grillage en milieu oxydant à haute température des résidus afin d'obtenir un résidu désulfuré,
• une réduction-fusion carburante du résidu désulfuré en milieu réducteur,
• une extraction en phase liquide de fonte carburée et de laitier,
• une extraction des métaux non-ferreux en phase vapeur, suivie de leur oxydation et de leur récupération sous forme solide.

## Description

### Domaine technique auquel se rapporte l'invention

La présente invention concerne un procédé de valorisation de résidus riches en zinc et en sulfates. Elle concerne plus particulièrement un procédé de traitement de résidus issus d'une étape de lixiviation neutre ou faiblement acide de l'extraction hydro-métallurgique du zinc. Ces résidus comprennent principalement de la ferrite de zinc (ZnFe₂O₄) et des composés sous forme de sulfates.

### État de la technique

Dans la métallurgie extractive du zinc, la sphalérite ou blende, minerai impur contenant du zinc sous forme de sulfure de zinc (ZnS), subit un grillage oxydant à une température comprise entre 910 et 980°C dont le but premier est de transformer les sulfures en oxydes. La calcine ainsi obtenue comprend principalement de l'oxyde de zinc (ZnO) et des composés sous forme d'oxydes et éventuellement de sulfates. Dans les étapes suivantes de lixiviation, la calcine est traitée avec une solution d'acide sulfurique faiblement concentrée dans le but d'en extraire le zinc. Le zinc extrait dans la phase liquide est ensuite soumis à une étape de purification avant de subir une électrolyse.

Le résidu issu de l'opération de lixiviation contient encore une quantité importante de zinc complexé, principalement sous forme de ferrites de zinc insolubles, générées lors de l'opération de grillage. Ce résidu contient également des métaux comme l'argent (Ag), le germanium (Ge), l'indium (In), etc.

Dans la filière hydro-métallurgique classique, la dissolution des ferrites de zinc dans les résidus issus de l'opération de lixiviation requiert l'utilisation de solutions acides concentrées et/ou chauffées, avec des concentrations en H₂SO₄ comprises entre 50 et 200 g/L. Un procédé de ce type est décrit dans le brevet US 4,415,540. Une part importante du zinc complexé peut être ainsi valorisée. Cependant, la décomplexation des ferrites entraîne la mise en solution du fer sous forme d'oxyde de fer ainsi que de nombreuses autres impuretés. L'élimination du fer fait l'objet de nombreux procédés hydro-métallurgiques dont les résidus typiques résultant de la précipitation du fer par hydrolyse sont l'hématite, la goethite, la paragoethite ou la jarosite. En raison du danger de lixiviation des métaux lourds contenus dans ces résidus, leur stockage sur des zones étanches et contrôlées ne peut être évité. Le renforcement des contraintes environnementales engendre des coûts de stockage élevés et la rentabilité de ces procédés est largement remise en question.

Le procédé US 4,072,503 décrit un procédé pyro-métallurgique de traitement des résidus générés au cours de l'extraction hydro-métallurgique du zinc. La matière est d'abord chauffée dans des conditions non réductrices avec introduction d'O₂ afin de décomposer les sulfures et sulfates. Ensuite, la matière désulfurée contenant les oxydes métalliques est réduite par addition d'un agent réducteur en quantité telle que le plomb et le zinc sont réduits, mais pas le fer, qui est éliminé dans le laitier. Les réacteurs peuvent être un four allongé à électrodes immergées ou un four rotatif.

Un procédé pyro-métallurgique récent (WO2005005674) propose de valoriser les métaux non ferreux tels que Cu, Ag, Ge et Zn contenus dans les résidus provenant de l'extraction hydro-métallurgique du zinc par un procédé en deux étapes combinant un four à étages multiples et un four à lance submergée. Dans le premier réacteur, les oxydes métalliques contenus dans les résidus traités sont pré-réduits à l'aide de coke. Les fumées collectées à la sortie du four contiennent entre autres du Pb et du Zn. Le pré-réduit est ensuite introduit dans le second réacteur, où il subit une fusion oxydante. Durant cette étape, le fer est éliminé avec le laitier sous forme FeO et Fe₂O₃. Le cuivre et l'argent sont extraits en phase liquide. Enfin, les fumées collectées contiennent le germanium ainsi que le reste de zinc et de plomb encore présent dans le produit. Ce procédé permet de valoriser une grande partie des métaux non-ferreux, mais une quantité très importante de laitier contenant plus de 30 % de Fe est produite: plus de 650 kg pour une tonne de résidus traités. Or, ce laitier n'est valorisable que s'il est stabilisé et utilisé dans le secteur de la construction. La valorisation du laitier est donc directement dépendante de la demande en matières premières de ce secteur. De plus, la marche à haute température du four à étages multiples en milieu réducteur entraîne une formation importante d'accrétions et de colmatages, d'où une maintenance très coûteuse du four et une perte de disponibilité de l'installation.

La valorisation économique de résidus riches en fer et en zinc, comme les poussières de four électrique, est possible grâce au procédé de réduction directe PRIMUS®, basé sur le procédé de réduction-fusion décrit dans le document WO2002/068700. La difficulté de traiter les résidus de lixiviation selon ce procédé est liée à la teneur élevée en soufre. En effet, en présence d'une telle quantité de soufre, le transfert du carbone du pré-réduit à la fonte est inhibé. De plus, une teneur élevée en soufre rend la fonte inutilisable.

### Objet de l'invention

L'objet de la présente invention est de proposer une solution alternative aux procédés existants de traitement de résidus riches en zinc et en sulfates provenant notamment de l'extraction hydro-métallurgique du zinc.

Ce but est atteint par un procédé de traitement de résidus, comprenant des ferrites de zinc et des métaux non-ferreux choisis parmi le groupe constitué par le plomb (Pb), l'argent (Ag), l'indium (In), le germanium (Ge) et le Gallium (Ga) ou leurs mélanges sous formes d'oxydes et de sulfates, comprenant les étapes suivantes :
a) un grillage des résidus en milieu oxydant à haute température afin d'obtenir un résidu désulfuré,
b) une réduction-fusion carburante du résidu désulfuré en milieu réducteur,
c) une extraction en phase liquide de fonte carburée et de laitier,
d) une extraction des métaux non-ferreux en phase vapeur, suivie de leur oxydation et de leur récupération en phase solide.

Les résidus mis en oeuvre dans le procédé proviennent avantageusement de l'extraction hydro-métallurgique du zinc, en particulier d'une étape de lixiviation neutre ou faiblement acide des minerais de zinc.

Les trois produits valorisables issus de ce procédé sont donc une fonte carburée, un laitier stable et inerte utilisable pour la fabrication de ciment ou comme ballast et un mélange d'oxydes sous forme pulvérulente contenant des métaux non-ferreux comme le zinc, le plomb, l'argent, l'indium et le germanium, le gallium (Zn, Pb, Ag, In, Ge, Ga).

Le procédé a l'avantage de permettre un recyclage quasi intégral des résidus
- y compris le fer - répondant ainsi aux exigences environnementales et aux exigences économiques par la valorisation des métaux non-ferreux, en particulier du zinc. En plus de la récupération des métaux non-ferreux, le procédé permet de valoriser de manière économique le fer contenu dans les résidus, réduisant simultanément la quantité de laitier formé. De plus, le laitier obtenu possède une composition proche de celle d'un laitier de haut-fourneau et peut par conséquent être valorisé de la même manière.

Avantageusement, une étape a1) comprenant une pré-réduction carbonée à l'état solide des oxydes de fer est insérée entre l'étape a) et l'étape b). Cette pré-réduction à l'étape a1) est conduite préférablement à une température comprise entre 800 et 900 °C.

Le grillage de l'étape a) et la pré-réduction de l'étape a1) sont réalisés, selon un autre mode de réalisation avantageux, dans un four à étapes multiples dans lequel la désulfuration des résidus en milieu oxydant à haute température (entre 1000 et 1100 °C) est réalisée dans les étages supérieurs et la pré-réduction à basse température dans les étages inférieurs. L'utilisation d'un four à étages permet un mélange intime des composés, ce qui rend la désulfuration efficace à plus basse température - désulfuration notable dès 900 °C, presque complète à 1000 °C. Pour le grillage de sulfates dans des fours allongés, la littérature cite des températures nettement plus élevées.

L'étape de pré-réduction a1) a pour objectif la réduction partielle des oxydes métalliques, tout en minimisant la réduction du zinc, celle-ci étant effectuée au four de fusion. La pré-réduction à l'étape a1) nécessite l'ajout d'un réacteur carboné, de préférence un charbon à teneure élevée en matières volatiles. L'abaissement de la température d'environ 1000°C à 1100°C à moins de 900°C est réalisé par l'introduction du réducteur carboné. Ce réducteur carboné n'est pas préchauffé avant l'introduction dans le four à étages, son humidité est de préférence comprise entre 10 et 20%.

La réduction-fusion carburante du résidu désulfuré en milieu réducteur est de préférence réalisée dans un four électrique à arc libre. Le pied de bain est de préférence fortement brassé par injection d'un gaz neutre (azote, argon) à travers la sole du four, ceci pour trois raisons :

- homogénéiser en température le bain métal et le laitier,

- renouveler la surface de la couche de laitier afin de permettre l'absorption de la matière traitée sans que celle-ci ne se solidifie et forme une croûte infranchissable,

- augmenter par entraînement l'extraction des métaux non-ferreux dans les gaz.

Les métaux non-ferreux pouvant être extraits selon le procédé sont entre autres le zinc, le plomb, l'argent, l'indium, le germanium, le gallium (Zn, Pb, Ag, In, Ge, Ga). Si les résidus contiennent du cuivre, celui-ci est extrait majoritairement en phase liquide avec la fonte.

L'argent est plus difficile à extraire en raison de sa tension de vapeur élevée. Toutefois, il est possible d'en vaporiser une grande partie en travaillant à une température plus élevée et en augmentant le débit de brassage du bain de fonte. Typiquement, la température d'un bain de fonte dans un four électrique se situe aux alentours de 1 500 °C et le débit de brassage est compris entre 80 et 120 L/min.t. En travaillant à une température supérieure à 1 550 °C avec un débit de brassage compris entre 100 et 300 L/min.t, le rendement d'extraction de l'argent est alors supérieur à 90 %.

### Description de modes de réalisation détaillés de l'invention

Selon un premier mode de réalisation préféré, le procédé selon l'invention peut être effectué dans deux réacteurs séparés. Le premier réacteur est par exemple un four rotatif classique, où le résidu est désulfuré. Ce résidu désulfuré est ensuite introduit avec de l'anthracite qui est nécessaire à la réduction et la carburation dans un four électrique conduit à une température voisine de 1 500 °C. Toutefois, cette réalisation semble économiquement peu intéressante, d'une part en raison de la quantité importante d'énergie fossile (gaz/fuel) nécessaire au grillage et d'autre part en raison du coût élevé de l'anthracite et de la consommation électrique également élevée.

Une possibilité de réduction des coûts consiste à remplacer l'anthracite par un agent réducteur meilleur marché, en l'occurrence un charbon à haute teneur en matières volatiles (> 30 %). On utilisera typiquement les charbons dits « charbon vapeurs », comprenant 50 à 55 % de C fixe, 35 à 40 % de composés volatiles et 7 à 10 % de cendres.

Dans un tel cas, une étape intermédiaire de dévolatilisation du charbon et de pré-réduction des oxydes de fer est alors ajoutée. Cette étape présente deux avantages par rapport au premier mode de réalisation. D'une part, la pré-réduction des oxydes de fer permet d'économiser de l'énergie électrique nécessaire à leur réduction dans le four électrique. D'autre part, la chaleur résultant de la combustion de l'excédent de gaz produit par le réacteur carboné est mise à profit pour satisfaire aux besoins énergétiques nécessaires au séchage et à la désulfuration de la matière. La pré-réduction est opérée à une température comprise entre 850 °C et 900°C pour obtenir un degré de métallisation du fer allant de 20 à 40 %. Le charbon est introduit en quantité suffisante pour assurer un excès de carbone libre nécessaire à la réduction complète des oxydes métalliques dans le four électrique.

Suivant un autre mode de réalisation préféré, l'étape de désulfuration et l'étape de pré-réduction sont réalisées dans deux fours rotatifs distincts pour un meilleur contrôle des températures et des milieux réactionnels contraires. Les composés volatils et les gaz chauds du réacteur de pré-réduction sont utilisés pour chauffer le réacteur de désulfuration. De l'air est injecté pour assurer la combustion des composés volatils, la postcombustion des gaz et les conditions oxydatives du milieu réactionnel.

D'autres caractéristiques et avantages ressortiront de la description détaillée d'un mode de réalisation avantageux, présenté ci-dessous, à titre d'illustration, en se référant au dessin annexé, sur lequel :

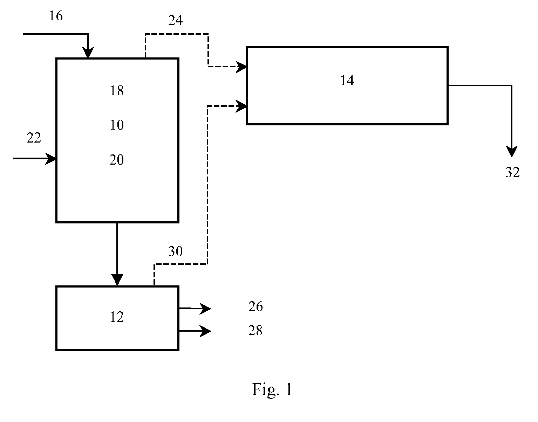

la Figure 1 représente schématiquement une installation permettant la mise en oeuvre du procédé selon l'invention.

Sur cette figure, la référence 10 désigne un four à étages multiples , la référence 12 un four électrique à arc et la référence 14 un dispositif de traitement des fumées provenant à la fois du four à étages multiples et du four électrique.

Les résidus, avant d'être introduit dans le four à étages multiples 10 par le conduit 16 sont de préférence granulés ou bouletés et pré-séchés pour faciliter leur manipulation.

Dans les étages supérieurs 18 se déroule l'étape a) de désulfuration. Les étages inférieurs 20 sont consacrés à la dévolatilisation du charbon qui est introduit par le conduit 22 et à la pré-réduction des oxydes de fer (étape a1)). Les composés volatils et les gaz chauds sont utilisés comme source d'énergie dans les étages supérieurs 18, où l'atmosphère oxydante est maintenue par l'injection d'air en excès dans les étages supérieurs 18.

En sortie du four à étages multiples 10, le produit solide désulfuré et préréduit se trouvant à une température d'environ 800 °C à 900 °C est acheminé vers le four électrique à arc 12.

Il se peut qu'il contienne une faible part de soufre lié au calcium sous forme de CaSO₄. Cependant, ce soufre est inoffensif lors de la production de la fonte, car il est éliminé sous la forme de CaS avec le laitier.

Les gaz de sortie issus du four à étages multiples 10 évacués par le conduit 24 contiennent une quantité relativement faible de poussières qui ont été mise en suspension lors du chargement de la matière dans le réacteur. Les poussières sont acheminées vers le dispositif de traitement des fumées 14 dans lequel elles sont mélangées aux oxydes pulvérulents de l'étape d).

Cette conduite du four avec des températures élevées dans les étages supérieurs et des températures basses dans les étages inférieurs est originale dans le sens où elle est inversée par rapport à la conduite habituelle d'un four à étages multiples.

Les étapes b), c) et d) se déroulent dans le même réacteur de façon simultanée.

L'étape b) du procédé est en fait la combinaison de deux phénomènes :
- la réduction complète des oxydes métalliques par un réducteur carboné,
- la fusion d'un bain métallique fortement brassé par ajout d'un gaz neutre, comme de l'azote (N2) ou de l'argon (Ar).

Les produits résultants de cette deuxième étape sont une fonte carburée (26), un laitier (28) contenant les principaux éléments de la gangue et des gaz (30) comprenant principalement du monoxyde et du dioxyde de carbone. Ces gaz sont par ailleurs chargés en composés métalliques sous forme de vapeur. Les gaz recueillis rejoignent la même ligne de traitement de fumées que les gaz produits au cours de l'étape a).

Le zinc et les autres métaux sont récupérés sous forme d'un produit pulvérulent (32), constitué d'oxydes et éventuellement de sulfates lorsque les composés se sont recombinés avec les SOₓ produits au cours de l'étape a).

Le procédé met donc en oeuvre, selon un mode de réalisation préféré, deux réacteurs. Le premier réacteur est un four à étages multiples dans lequel les étages supérieurs sont consacrés à la désulfuration du produit en milieu oxydant à haute température et les étages inférieurs à la pré-réduction du fer à basse température avec introduction de charbon volatil à ce niveau. Le second réacteur est un four électrique à arc libre dans lequel se déroulent les étapes de réduction finale et de fusion, ainsi que l'extraction de métaux non ferreux.

D'autres particularités et caractéristiques de l'invention ressortiront de la description détaillée d'un mode de réalisation avantageux présenté ci-dessous, à titre d'illustration.

### Exemple 1 : désulfuration en milieu oxydant

Une étude expérimentale menée en laboratoire a permis de démontrer la possibilité de décomposer thermiquement les composés sulfatés d'une lixiviation faiblement acide. Les résultats d'analyse sont présentés dans le Tableau 1.

### Description de l'installation d'essais

L'installation d'essais est constituée d'un four laboratoire à sole unique équipé d'une ligne de traitement de gaz. Ce four simule en batch le procédé d'un four à soles multiples continu, c'est-à-dire la progression des phénomènes métallurgiques continus. Le four laboratoire possède un diamètre intérieur de 500 mm. Il est chauffé au moyen de résistances électriques placées en voûte. Sur l'axe central sont fixés deux bras diamétralement opposés supportant chacun une paire de dents orientée en sens contraire. Un brassage continu est ainsi garanti sans accumulation de matière le long de la paroi du four. L'injection de gaz par un conduit dans l'enceinte du four permet de créer et de maintenir une atmosphère adaptée au besoin de l'essai, et ceci indépendamment du réglage de température. Les gaz formés lors des réactions d'oxydo-réduction sont collectés dans une chambre de postcombustion, dans laquelle sont brûlés les éventuels composés combustibles. Les gaz sont ensuite refroidis, puis filtrés, avant d'être rejetés à l'atmosphère par une cheminée.

### Description des essais

Des essais batch menés avec 6,0 kg de résidus de lixiviation, principalement constitués de ferrite de zinc (ZnO.Fe₂O₃), de sulfate de plomb (PbSO₄), de sulfate de calcium (CaSO₄), de sulfate de zinc (ZnSO₄) et d'impuretés telles que SiO₂, MgSO₄, Al₂O₃, CuSO₄, ont été réalisés dans l'enceinte décrite ci-dessus. La matière est granulée, puis pré-séchée pour la rendre aisément manipulable et transportable. Elle est ensuite introduite à température ambiante dans le four préchauffé à 1050 °C. Dans l'enceinte du four, l'atmosphère oxydante est garantie par injection d'air à débit constant. La durée d'un essai est de 60 minutes. La vitesse de rotation de l'axe central est constante à 3 tours par minute. La température du produit est mesurée régulièrement à l'aide d'un thermocouple. Parallèlement à la mesure, un échantillon de matière est prélevé, puis refroidi avec de l'azote liquide. L'échantillon est finement broyé, puis analysé.

### Résultats

Le résidu de départ contient 5,01% de S. Les analyses montrent que 70 % de la matière est désulfurée en 15 min. Après 60 min, le taux de désulfuration du résidu est de 95 %. La faible quantité de S (0,24 %) encore présente dans la matière semble être liée à Ca sous forme CaSO₄. De la décomposition thermique des sulfates résulte la libération de SO₃ et SO₂ qui sont collectés dans la ligne de traitement de fumées. Ces gaz collectés sont composés principalement de SOₓ, H₂O, N₂ et O₂.

La quantité de plomb et de zinc est identique avant et après les essais, ce qui permet de conclure qu'à haute température, en milieu oxydant, le plomb et le zinc ne se volatilisent pas.

Les objectifs de la première étape sont largement atteints avec un taux de désulfuration supérieur à 95 % pour une température de 1050 °C. Le facteur limitant du traitement du résidu dans le four de fusion est une teneur en soufre supérieure à 0,5%. L'étude a montré que la température a une influence directe sur le taux de désulfuration du produit. L'homme de métier saura facilement adapter la température et le temps de résidence en fonction du degré de désulfuration visé.

### Exemple 2 : pré-réduction des oxydes de fer

L'étude expérimentale a été poursuivie pour démontrer la possibilité de préréduire les oxydes de fer contenus dans le résidu de lixiviation acide. L'agent réducteur est un charbon, à haute teneur en matières volatiles, contenant 55 % de charbon fixe. Les résultats d'analyse sont présentés dans le Tableau 1.

Le dispositif d'essai est le même que décrit dans l'exemple 1.

Le résidu de lixiviation faiblement acide désulfuré en atmosphère oxydante est conservé dans l'enceinte du four laboratoire. 2,2 kg de charbon humide sont ajoutés et mélangés à la matière grâce au brassage continu. Cette quantité correspond à un ratio de 300 kg pour 1 t de résidu. Auparavant, l'injection d'air a été stoppée. L'injection d'azote à débit constant a pour but d'empêcher les entrées d'air parasite, ceci afin de protéger l'atmosphère réductrice. L'eau contenue dans le charbon est évaporée. La flamme observée dans la chambre de postcombustion est due à la combustion du monoxyde de carbone produit lors de la réduction des oxydes de fer. La durée d'un essai est d'une heure pendant laquelle la température de la matière est régulièrement mesurée. Toujours selon le mode opératoire décrit dans l'exemple 1, des échantillons sont prélevés parallèlement à ces mesures, puis analysés.

### Résultats

Les oxydes de fer contenus dans le résidu sont partiellement réduits. Les phases du fer présentes dans le pré-réduit sont la wustite (FeO) et le fer métallique (Fe). Le mélange de gaz collecté dans la ligne de traitement de fumées est composé principalement de H₂O, CO, CO₂, N₂ et O₂. Les proportions de chaque gaz varient en fonction de la cinétique des réactions mises en jeu.

À 1 000 °C, le taux de métallisation est supérieur à 90 %. Mais l'expérience montre qu'il est souvent préférable de travailler à 900 °C. En effet, la métallisation très rapide du fer en surface conduit au collage en « grappes » des granules. A 900°C, le taux de métallisation est inférieur à 75 %, mais reste satisfaisant pour assurer la rentabilité économique d'une installation industrielle.

II est à noter que le charbon est une source supplémentaire de soufre ce qui explique la quantité de soufre plus élevée dans le pré-réduit que dans le résidu désulfuré. Cette quantité est toutefois faible n'affecte pas le rendement ni la qualité des produits finaux.

### Exemple 3 : réduction finale et fusion

Cet exemple décrit l'essai de réduction/fusion du pré-réduit, résidu de lixiviation faiblement acide, préalablement séché et désulfuré. Les produits à la sortie du four de fusion sont une fonte carburée contenant du cuivre, un laitier inerte composé des principaux constituants de la gangue et de la fumée contenant de nombreux métaux sous forme de gaz ou de poussière. L'oxydation, le refroidissement et la filtration de ces composés se déroulent dans la ligne de traitement de fumées.

### Description de l'installation d'essais et du procédé de fusion

L'installation est un four électrique à arc équipé d'une ligne de traitement de gaz comparable à celle du premier four. Le four possède un diamètre de 2,5 m et peut contenir 6 t de fonte. La matière est chargée par gravité, à débit constant, dans la zone centrale du four. L'arc permet de chauffer le bain à la température souhaitée. La fusion réalisée est du type PRIMUS® avec un bain fortement brassé par injection pneumatique de gaz (N₂). Le laitier est évacué par une porte prévue à cet effet, la fonte par le trou de coulée. Les gaz chargés en poussière sont collectés dans la ligne de traitement de fumées. Une chambre de postcombustion assure la combustion du CO en CO₂, ainsi que celle des autres composées combustibles, et le refroidissement des gaz par ajout d'air en excès. Avant d'être libérés dans l'atmosphère, les gaz passent par un filtre à manches où les poussières sont récupérées.

### Description de l'essai

Le but de l'essai est d'établir le coefficient de répartition des différents éléments, en particulier des éléments métalliques valorisables comme Zn, Pb, Ag, Ge, grâce à l'analyse de la fonte, le laitier et les poussières produits.

Le résidu de la lixiviation faiblement acide désulfuré et partiellement réduit est introduit à débit constant dans le four électrique contenant un bain de fonte nécessaire à la formation de l'arc électrique. Le bain est maintenu à une température de 1 500 °C pendant plusieurs heures. Une mesure continue du taux de carbone permet un contrôle du bon déroulement de l'essai du point de vue du procédé. Une prise d'échantillon est effectuée toutes les demi-heures à l'aide d'un manipulateur. La matière prélevée est ensuite analysée. Pour assurer une bonne fluidité, la basicité du laitier est ajustée à l'aide d'un additif.

### Résultats

La fonte obtenue est constituée de 93,5 % de Fe, 4 % de C, 2,5 % de Cu et quelques traces d'autres éléments.

Le laitier contient les éléments principaux de la gangue : essentiellement SiO₂, CaO, Al₂O₃, MgO, MnO, S.

Les oxydes de métaux valorisables Zn, Pb, Ag, Ge, sont récupérés dans les poussières collectées dans le filtre de la ligne de traitement de fumées.

### Exemple 4 : balance massique

Sur base des études expérimentales décrites dans les exemples 1, 2 et 3, la balance massique a été calculée pour le procédé complet de traitement d'un résidu de lixiviation faiblement acide.

**Tableau 1: Balance massique du procédé de désulfuration-réduction-fusion**

| **Produits à** **l'entrée du four** | **Masse** | **Élément [Ma.-%]** | | | | | | | | | | |
|---|---|---|---|---|---|---|---|---|---|---|---|---|
| | **[g]** | **Fe** | **Zn** | **Pb** | **Cu** | **C** | **S** | **Ag** | **In** | **Ge** | **Gangue** | **Autres** |
| **Résidu de LAF sec** | 6000 | 28,2 | 22,6 | 4,9 | 0,8 | 0,5 | 5,6 | 0,045 | 0,004 | 0,0075 | 18,5 | 18,8 |
| **Charbon** | 2000 | | | | | 55,0 | 0,7 | | | | 4,5 | 39,8 |
| | | | | | | | | | | | | |

| **Produits à l'entrée** **du four fusion** | **Masse** | **Élément : [Ma.-%]** | | | | | | | | | | |
|---|---|---|---|---|---|---|---|---|---|---|---|---|
| | [g] | **Fe** | **Zn** | **Pb** | **Cu** | **C** | **S** | **Ag** | **In** | **Ge** | **Gangue** | **Autres** |
| **Résidu désulfuré et pré-réduit** | 5 106 | 32,5 | 26,0 | 5,6 | 0,9 | 8,9 | 0,6 | 0,052 | 0,005 | 0,009 | 23,1 | 2,2 |
| **CaO** | 900 | | | | | | | | | | 100,0 | |
| | | | | | | | | | | | | |

| **Produits à la sortie** **du four fusion** | **Masse** | **Élément : [Ma.-%]** | | | | | | | | | | |
|---|---|---|---|---|---|---|---|---|---|---|---|---|
| | [g] | **Fe** | **Zn** | **Pb** | **Cu** | **C** | **S** | **Ag** | **In** | **Ge** | **Gangue** | **Autres** |
| **Fonte** | 1 648 | 93,5 | <0,01 | <0,01 | 2,49 | 4,0 | 0,05 | 0,016 | <0,001 | 0,001 | < 0,1 | < 0,1 |
| **Laitier** | 2 183 | 4,0 | <0,5 | <0,3 | < 0,1 | < 0,5 | 1,3 | | | | 93,3 | |
| **Concentré ZnO** | 2503 | 2,7 | 53,6 | 11,5 | 0,2 | < 0,5 | 12,8 | 0,1 | 0,0095 | 0,017 | 2,5 | 16,1 |

Le taux de recouvrement d'Ag, est supérieur à 90 % ; celui de Zn, Pb, In et Ge est supérieur à 95 %.

## Revendications

1. Procédé de traitement de résidus comprenant des ferrites de zinc et des métaux non ferreux choisis parmi le groupe constitué par le plomb (Pb), l'argent (Ag), l'indium (In), le germanium (Ge) et le Gallium (Ga) ou leurs mélanges sous forme d'oxydes et de sulfates comprenant les étapes suivantes :
a) un grillage en milieu oxydant à haute température des résidus afin d'obtenir un résidu désulfuré,
b) une réduction-fusion carburante du résidu désulfuré en milieu réducteur,
c) une extraction en phase liquide de fonte carburée et de laitier,
d) une extraction des métaux non-ferreux en phase vapeur, suivie de leur oxydation et de leur récupération sous forme solide.

2. Procédé selon la revendication 1, **caractérisé en ce que** le grillage de l'étape a) est réalisé à des températures comprises entre 1000°C et 1100°C.

3. Procédé selon la revendication 1 ou 2, **caractérisé en ce que** la teneur résiduelle en soufre du résidu désulfuré ne doit pas dépasser 0.5 % de la masse totale du résidu.

4. Procédé selon l'une quelconque des revendications précédentes, **caractérisé en ce qu'**entre l'étape a) et l'étape b) est inséré une l'étape a1) comprenant une pré-réduction carbonée à l'état solide des oxydes de fer.

5. Procédé selon la revendication 4, **caractérisé en ce que** la pré-réduction à l'étape a1) est conduite à des températures situées autour de 900°C.

6. Procédé selon l'une quelconque des revendications précédentes, **caractérisé en ce que** le grillage de l'étape a) et la pré-réduction de l'étape a1) sont réalisées dans un four à étapes multiples dans lequel l'étape a) est réalisée dans les étages supérieurs et l'étape a1) est réalisée dans les étages inférieurs.

7. Procédé selon la revendication 6, **caractérisé en ce que** l'étape a1) est réalisée dans les étages inférieures avec introduction de charbon à ce niveau.

8. Procédé selon l'une quelconque des revendications précédentes, **caractérisé en ce que** la réduction-fusion carburante du résidu désulfuré en milieu réducteur est réalisée dans un four électrique à arc.

9. Procédé selon la revendication 8, **caractérisé en ce que** le bain de fer carburé à 1500 °C est brassé avec un débit d'azote ou d'argon compris entre 50 et 100 L/min.t.

10. Procédé selon l'une quelconque des revendications précédentes, **caractérisé en ce que** les résidus comprenant des ferrites de zinc et des métaux non ferreux choisis parmi le groupe constitué par le plomb (Pb), l'argent (Ag), l'indium (In), le germanium (Ge) et le Gallium (Ga) ou leurs mélanges sous formes d'oxydes et de sulfates sont des résidus provenant d'extraction hydro-métallurgique du zinc.

11. Procédé selon l'une quelconque des revendications précédentes, **caractérisé en ce que** la température du bain de fusion est supérieure à 1550 ° C et le débit de brassage est compris entre 100 et 300 L/min.t pour augmenter le rendement de I' extraction des métaux précieux.
